# EUROPÄISCHE PATENTANMELDUNG

(11) **EP 0 671 533 A1**
(43) Veröffentlichungstag der Anmeldung: **13.09.1995**
(21) Anmeldenummer: 95200422.4
(22) Anmeldetag: 21.02.1995
(51) Int. Cl.: E05G 1/024, B23K 35/32

(54) **Schichtverbundelement**

(30) Priorität: 09.03.1994 DE 4407815
(71) Anmelder: METALLGESELLSCHAFT AG, D-60323 Frankfurt am Main (DE)
(72) Erfinder: Kruske, Gerhard, D-61440 Oberursel (DE); Reimann, Hartwig, Dr., D-65835 Liederbach (DE); Lagies, Klaus, D-44309 Dortmund (DE)

(57) **Zusammenfassung**

Ein Schichtverbundelement für die Ummantelung von Sicherheitseinrichtungen besteht aus zwei parallel zueinander verlaufenden Stahlplatten (1,4), die über mit diesen verschweißte Abstandhalter (2) miteinander verbunden sind und zwischen denen eine Bewehrungsschicht (3) angeordnet ist. Zur Verringerung des Fertigungsaufwands besteht die Bewehrungsschicht aus selbstfließender Ni-Cr-B-Si-Legierung mit feinverteilter arteigener boridischer und/oder carbidischer Hartphase und darin eingelagertem Hartstoff.

## Beschreibung

Die Erfindung betrifft ein Schichtverbundelement für die Ummantelung von Sicherheitseinrichtungen, insbesondere zum Schutz von Bankautomaten, Geldschränken, Sicherheitsschränken und dergleichen, aufgebaut aus zwei parallel zueinander verlaufenden Stahlplatten, die über mit diesen verschweißte Abstandhalter verbunden sind und zwischen denen eine Bewehrungsschicht angeordnet ist, und ein Verfahren zur Herstellung des Schichtverbundelements.

Einerseits müssen derartige Schichtverbundelemente einen ausreichenden Widerstand gegenüber zerstörerischen Angriffen durch manuell betätigte, elektrisch angetriebene und/oder thermisch wirkende Einbruchswerkzeuge aufweisen; andererseits sollen diese Schichtverbundelemente ein möglichst geringes Eigengewicht besitzen, um gut handhabbar zu sein und um die durch sie verursachte statische Belastung von Gebäudeteilen so niedrig wie möglich zu halten.

Ein solches Schichtverbundelement ist in der DE-A-36 30 429 beschrieben. Dabei ist zwischen zwei parallel zueinander angeordneten Stahlplatten eine aus metallischen und nichtmetallischen Hartstoffkörnern bestehende Bewehrungsschicht vorgesehen, deren Zwischenräume mit mit den Stahlplatten stoffschlüssig verbundener Hartlotmasse ausgefüllt sind.

Obwohl solche Schichtverbundelemente für die Ummantelung von Sicherheitseinrichtungen, insbesondere von Banksicherheitssystemen, in großem Umfang eingang gefunden haben, ist es das Bestreben, solche Sicherheitsverbundelemente in ihrem Aufbau so zu verbessern, daß der Fertigungsaufwand verringert, das Gewicht erniedrigt und damit eine einfachere Handhabbarkeit erreicht wird, ohne daß jedoch der Widerstand gegen zerstörerische Angriffe durch Einbruchswerkzeuge aller Art beeinträchtigt wird.

Gelöst ist diese Aufgabe durch eine eingeschmolzene Zwischenschicht aus selbstfließender Ni-Cr-B-Si-Legierung mit feinverteilter arteigener boridischer und/oder carbidischer Hartphase, die vorzugsweise 40 bis 60 Vol.-% beträgt, und mit einem oder mehreren darin eingelagerten Hartstoffen, wie Chrom-, Wolfram-, Molybdän-, Titan-, Niob-, Vanadium-Carbide, -Nitride und -Silizide, die vorzugsweise 30 bis 60 Gew.-% betragen. Das Matrixmetall Nickel bildet mit dem Chrom und mit den Metalloiden Bor und Silizium ausgesprochen spröde Hartphasen, die eine vergleichsweise hohe Härte besitzen und demzufolge gegenüber abrasiver Beanspruchung ausgesprochen widerstandsfähig sind. Diese Wirkung wird beträchtlich durch die in der Bewehrungsschicht eingelagerten Hartstoffe verstärkt. Das Legierungsgefüge ist ohne größere Aufmischung mit dem Grundwerkstoff über die Schichtdicke nahezu konstant.

Mit steigenden Metalloidgehalten steigt die Härte durch Bildung vermehrter Hartphasenanteile im Gefüge, während die Breite des Schmelzbereichs abnimmt und die Liquidustemperatur sinkt. Wenn die Härte als ein maßgeblicher Faktor für den Widerstand gegen abrasive Beanspruchung betrachtet wird, nimmt demnach mit steigenden Metalloidgehalten der Widerstand zu, womit allerdings durch Abnahme der zähen Matrixbestandteile im Gefüge auch die Sprödigkeit zunimmt.

Die Bewehrungsschicht kann ferner noch 0,5 bis 5 Gew.-% Graphit, 5 bis 30 Gew.-% Molybdän, 3 bis 25 Gew.-% Kupfer einzeln oder zu mehreren enthalten. Diese Elemente wirken als Festschmierstoff, der den Widerstand gegenüber zerstörerischen Angriffen durch spanendes Trennen mit geometrisch bestimmten Schneiden, vorzugsweise durch Bohren, und geometrisch unbestimmten Schneiden, vorzugsweise durch Schleifen mit rotierendem Werkzeug, erhöht, weil die Schneiden verschmieren. Graphit erhöht den Widerstand gegenüber thermisch wirkenden Schneid- und Schmelzwerkzeugen.

Es ist auch möglich, daß die metallischen Hartstoffe teilweise durch nichtmetallische Hartstoffe, wie Oxide, Carbide, Keramik, Mineralien etc., im Verhältnis von bis zu zwei Teilen bezogen auf einen Teil des metallischen Hartstoffs ersetzt sind. Durch diese Maßnahme wird der Widerstand gegenüber thermisch wirkenden Angriffen erhöht.

Die Ni-Cr-B-Si-Legierung setzt sich vorzugsweise zusammen aus 6 bis 28 Gew.-% Chrom, 1,5 bis 3,5 Gew.-% Bor, 1,0 bis 4,5 Gew.-% Silizium, 0,15 bis 1,2 Gew.-% Kohlenstoff, Rest Nickel, wobei ggf. noch 3 bis 20 Gew.-% Eisen und/oder 2 bis 10 Gew.-% Phosphor zulegiert sein können. Durch diese beiden Elemente wird die Verarbeitbarkeit der Legierung verbessert.

Zur Herstellung des Schichtverbundelements wird eine Mischung aus pulverförmiger Ni-Cr-B-Si-Legierung und artfremden Hartstoffkörnern auf die erste mit angeschweißten Abstandhaltern versehene Stahlplatte aufgetragen, nachfolgend unter Vakuum oder inerter Atmosphäre eingeschmolzen und dann die zweite Stahlplatte mit den Abstandhaltern verschweißt.

Nachfolgend ist die Erfindung anhand einer Zeichnung näher und beispielhaft erläutert. Es zeigen:

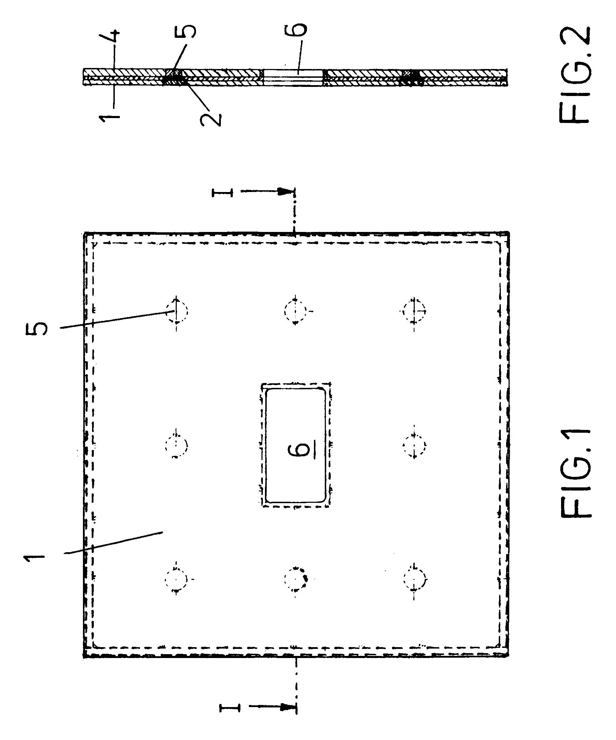

Fig. 1 eine Seitensicht des Schichtverbundelements,
Fig. 2 einen Schnitt entlang der Schnittlinie I-I.

Auf der nach außen weisenden, aus legiertem austenitischem Stahl bestehenden Platte (1) des Schichtverbundelements sind die aus Stahl bestehenden Abstandhalter (2) angeschweißt und die selbstfließende, die Bewehrungsschicht (3) bildende Ni-Cr-B-Si-Legierung der Zusammensetzung 14 Gew.-% Chrom, 2,5 Gew.-% Bor, 3 Gew.-% Silizium, 0,5 Gew.-% Kohlenstoff, Rest Nickel mit darin eingelagerten Chrom-Carbidkörnern eingeschmolzen. An den den Abstandhaltern (2) gegenüberliegenden Stellen der nach innen weisenden Stahlplatte (4) ist diese mit Durchbrechungen (5) versehen, die durch Schweißen mit artgleichem Werkstoff aufgefüllt sind, so daß die Stahlplatte (4) mit den Abstandhaltern (2) verbunden ist. Die Öffnung (6) ist systembedingt und dient beispielsweise der Durchführung von Kabeln für die Energieversorgung, dem Einbau eines Sensors oder dergleichen.

Es ist auch möglich, daß die Abstandhalter (2) an der nach innen weisenden Stahlplatte (4) angeschweißt sind und an den den Abstandhaltern (2) gegenüberliegenden Stellen der nach außen weisenden Stahlplatte (1) Durchbrechungen (5) vorgesehen sind.

## Patentansprüche

1. Schichtverbundelement für die Ummantelung von Sicherheitseinrichtungen, insbesondere zum Schutz von Bankautomaten, Geldschränken und Sicherheitsschränken, aufgebaut aus zwei parallel zueinander verlaufenden Stahlplatten (1, 4), die über mit diesen verschweißte Abstandhalter (2) miteinander verbunden sind und zwischen denen eine Bewehrungsschicht (3) angeordnet ist, dadurch gekennzeichnet, daß die eingeschmolzene Bewehrungsschicht (3) aus selbstfließender Ni-Cr-B-Si-Legierung mit feinverteilter arteigener boridischer und/oder carbidischer Hartphase und darin eingelagertem Hartstoff besteht.

2. Schichtverbundelement nach Anspruch 1, dadurch gekennzeichnet, daß der Gehalt an Hartphasen 40 bis 60 Vol.-% beträgt.

3. Schichtverbundwerkstoff nach den Ansprüchen 1 und 2, dadurch gekennzeichnet, daß der Gehalt an Hartstoff 30 bis 60 Gew.-% beträgt.

4. Schichtverbundwerkstoff nach einem der Ansprüche 1 bis 3, dadurch gekennzeichnet, daß die Hartstoffe in Form von Chrom-, Wolfram-, Molybdän-, Titan-, Niob-, Vanadium-Carbiden, Nitriden, -Siliziden einzeln oder zu mehreren in der Bewehrungsschicht eingelagert sind.

5. Schichtverbundwerkstoff nach einem oder mehreren der Ansprüche 1 bis 4, dadurch gekennzeichnet, daß in der Bewehrungsschicht 0,5 bis 5 Gew.-% Graphit, 5 bis 30 Gew.-% Molybdän, 3 bis 25 Gew.-% Kupfer einzeln oder zu mehreren eingelagert sind.

6. Gleitlager nach einem oder mehreren der Ansprüche 1 bis 5, dadurch gekennzeichnet, daß die Ni-Cr-B-Si-Legierung mit 3 bis 20 Gew.-% Eisen und/oder 2 bis 10 Gew.-% Phosphor legiert ist.

7. Schichtverbundelement nach einem oder mehreren der Ansprüche 1 bis 6, dadurch gekennzeichnet, daß der metallische Hartstoff teilweise durch nichtmetallischen Hartstoff, wie Oxide, Carbide, Keramik, Mineralien etc., vorzugsweise im Verhältnis von bis zu zwei Teilen nichtmetallischem Hartstoff auf einen Teil metallischem Hartstoff, ersetzt ist.

8. Verfahren zur Herstellung des Schichtverbundelements nach einem der Ansprüche 1 bis 7, dadurch gekennzeichnet, daß ein Gemisch aus Ni-Cr-B-Si-Legierungspulver und artfremden Hartstoffkörnern auf die mit den angeschweißten Abstandhaltern versehene erste Stahlplatte aufgetragen, das Ganze auf eine Temperatur von 870 bis 1200°C 5 bis 15 min lang unter Vakuum oder inerter Atmosphäre eingeschmolzen und dann die zweite Stahlplatte mit den Abstandhaltern verschweißt wird.
